(19) **Europäisches Patentamt**
**European Patent Office**
**Office européen des brevets**

(11) **EP 4 545 255 A1**

(12) **EUROPEAN PATENT APPLICATION**

(43) Date of publication:
**30.04.2025 Bulletin 2025/18**

(21) Application number: **24176593.2**

(22) Date of filing: **17.05.2024**

(51) International Patent Classification (IPC):
**B25J 9/16** *(2006.01)* **B60L 13/00** *(2006.01)*
**G05B 19/416** *(2006.01)*

(52) Cooperative Patent Classification (CPC):
**B25J 9/1651; B25J 9/1602; B25J 9/1664;**
**B60L 13/00;** B60L 2200/26; B60L 2200/40;
B60L 2240/12; B60L 2240/14; B60L 2240/16;
B60L 2240/18; G05B 19/416; G05B 2219/40298

(84) Designated Contracting States:
**AL AT BE BG CH CY CZ DE DK EE ES FI FR GB**
**GR HR HU IE IS IT LI LT LU MC ME MK MT NL**
**NO PL PT RO RS SE SI SK SM TR**
Designated Extension States:
**BA**
Designated Validation States:
**GE KH MA MD TN**

(30) Priority: **26.10.2023 CN 202311397196**

(71) Applicant: **CSG Power Generation (Guangdong)**
**Energy Storage**
**Technology Co., Ltd**
**Guangzhou, Guangdong 510635 (CN)**

(72) Inventors:
• **WANG, Zhiqiang**
**No.34 Longkou East Road, Tianhe District,**
**Guangzhou, Guangdong, 510635 (CN)**
• **ZHOU, Liangrui**
**No.34 Longkou East Road, Tianhe District,**
**Guangzhou, Guangdong, 510635 (CN)**
• **PENG, Cheng**
**No.34 Longkou East Road, Tianhe District,**
**Guangzhou, Guangdong, 510635 (CN)**
• **WU, Jiasheng**
**No.34 Longkou East Road, Tianhe District,**
**Guangzhou, Guangdong, 510635 (CN)**

• **DONG, Chao**
**No.34 Longkou East Road, Tianhe District,**
**Guangzhou, Guangdong, 510635 (CN)**
• **WANG, Jin**
**No.34 Longkou East Road, Tianhe District,**
**Guangzhou, Guangdong, 510635 (CN)**
• **LIU, Bangjin**
**No.34 Longkou East Road, Tianhe District,**
**Guangzhou, Guangdong, 510635 (CN)**
• **LIAO, Junrong**
**No.34 Longkou East Road, Tianhe District,**
**Guangzhou, Guangdong, 510635 (CN)**
• **CHENG, Chao**
**No.34 Longkou East Road, Tianhe District,**
**Guangzhou, Guangdong, 510635 (CN)**
• **ZOU, Lunsen**
**No.34 Longkou East Road, Tianhe District,**
**Guangzhou, Guangdong, 510635 (CN)**
• **ZHAO, Shaohua**
**No.34 Longkou East Road, Tianhe District,**
**Guangzhou, Guangdong, 510635 (CN)**

(74) Representative: **Penza, Giancarlo**
**Bugnion S.p.A.**
**Viale Lancetti, 17**
**20158 Milano (IT)**

(54) **SYSTEM AND METHOD FOR GUIDE-RAIL ROBOT MOTION CONTROL, COMPUTER APPARATUS AND STORAGE MEDIUM**

(57) A system and method for guide-rail robot motion control, a computer apparatus, and a storage medium are disclosed. The system includes an accelerometer (102), a gyroscope (104), and a motion controller (106). The motion controller (106) is configured to: determine a real-time load rate corresponding to the guide-rail robot based on a real-time acceleration received from the accelerometer (102) and a real-time inclination angle received from the gyroscope (104); obtain a maximum acceleration in a target acceleration curve based on a ratio of the real-time acceleration to the real-time load rate; adjust an original acceleration curve based on the maximum acceleration, to obtain the target acceleration curve corresponding to the original acceleration curve; and control the guide-rail robot to move based on the target acceleration curve. By use of the system, an excessively large load can be prevented during the motion of the guide-rail robot.

EP 4 545 255 A1

System for Guide-rail Robot Motion Control

102

Accelerometer

104

Gyroscope

106

Motion controller

FIG. 1

## Description

## TECHNICAL FIELD

The present disclosure relates to the field of robot technologies, and in particular, to a system and method for guide-rail robot motion control, a computer apparatus and a storage medium.

## BACKGROUND

A guide-rail robot refers to a robot that can move along a guide rail. The guide-rail robot is generally controlled to move at a speed in a trapezoidal profile. This motion control mode includes motion stages of constant acceleration, constant speed, and constant deceleration. When changing the speed, the guide-rail robot accelerates or decelerates at a constant rate until a target speed is reached.

However, according to this motion control mode, at the moment of acceleration or speed stabilization, the guide-rail robot may tilt and swing back and forth due to inertia, resulting in a large load deformation at a connection position thereof, thereby reducing the service life and operational stability of the guide-rail robot. Moreover, due to a large load on an unloading structure in this motion control mode, the load applied on the unloading structure is required to be relieved by reducing the acceleration during deceleration, resulting in a need to reserve a large braking distance for deceleration during high-speed motion.

Therefore, at present, there is a problem of a large load in a motion control technology of guide-rail robots.

## SUMMARY

Based on the above, there is a need to provide, with respect to the above technical problems, a system and method for guide-rail robot motion control, a computer apparatus, and a storage medium, which can reduce a load.

In a first aspect, the present disclosure provides a system for guide-rail robot motion control. The system includes an accelerometer, a gyroscope, and a motion controller. The accelerometer and the gyroscope are both coupled to the motion controller. The accelerometer is configured to acquire a real-time acceleration of a guide-rail robot and send the real-time acceleration to the motion controller. The gyroscope is configured to acquire a real-time inclination angle of the guide-rail robot and send the real-time inclination angle to the motion controller. The motion controller is configured to receive the real-time acceleration from the accelerometer, and receive the real-time inclination angle from the gyroscope. The motion controller is further configured to: determine a real-time load rate corresponding to the guide-rail robot based on the received real-time acceleration and real-time inclination angle; adjust an original acceleration curve based on the real-time load rate; obtain a target acceleration curve corresponding to the original acceleration curve; and control the guide-rail robot to move based on the target acceleration curve.

In an embodiment, the motion controller is further configured to obtain a maximum acceleration in the target acceleration curve based on a ratio of the real-time acceleration to the real-time load rate, adjust the original acceleration curve based on the maximum acceleration, and obtain the target acceleration curve.

In an embodiment, an original speed curve corresponding to the original acceleration curve and a target speed curve corresponding to the target acceleration curve are both S-shaped curves, and time intervals corresponding to each of the S-shaped curves include a positive-jerk acceleration interval, a constant acceleration interval, a negative-jerk acceleration interval, a constant speed interval, a positive-jerk deceleration interval, a constant deceleration interval, and a negative-jerk deceleration interval.

In an embodiment, the motion controller is further configured to acquire a time difference between a current time and a first target time, and an acceleration difference between the real-time acceleration and the maximum acceleration, determine a target slope in the target acceleration curve based on a ratio of the acceleration difference to the time difference, and adjust the original acceleration curve based on the target slope, to obtain the target acceleration curve.

In an embodiment, the motion controller is further configured to adjust the original acceleration curve to obtain the target acceleration curve when the real-time load rate exceeds a preset load rate threshold.

In an embodiment, the motion controller is further configured to take the target acceleration curve as a new original acceleration curve, and control the guide-rail robot to move based on the new original acceleration curve. The motion controller is further configured to adjust the new original acceleration curve based on a new real-time acceleration acquired by the accelerometer and a new real-time inclination angle acquired by the gyroscope, to obtain a new target acceleration curve.

In an embodiment, the motion controller is further configured to determine a target speed of the guide-rail robot at a second target time based on a target speed curve corresponding to the target acceleration curve, and control the guide-rail robot to move based on the target speed at the second target time.

In a second aspect, the present disclosure provides a method for guide-rail robot motion control applied to a motion controller in the system for guide-rail robot motion control as described above in the first aspect. The method includes: determining a real-time load rate corresponding to the guide-rail robot based on the real-time acceleration acquired by the accelerometer and the real-time inclination angle acquired by the gyroscope; adjusting an original acceleration curve based on the real-time load rate, to obtain a target acceleration curve corresponding to the original acceleration curve; and controlling the guide-rail robot to move based on the target acceleration curve.

In a third aspect, the present disclosure further provides a computer apparatus. The computer apparatus includes a memory and a processor. The memory stores a computer program. The processor, when executing the computer program, implements the following steps: determining a real-time load rate corresponding to the guide-rail robot based on the real-time acceleration acquired by the accelerometer and the real-time inclination angle acquired by the gyroscope; adjusting an original acceleration curve based on the real-time load rate, to obtain a target acceleration curve corresponding to the original acceleration curve; and controlling the guide-rail robot to move based on the target acceleration curve.

In a fourth aspect, the present disclosure further provides a computer-readable storage medium. The computer-readable storage medium has a computer program stored thereon. The computer program, when executed by a processor, causes the processor to implement the following steps: determining a real-time load rate corresponding to the guide-rail robot based on the real-time acceleration acquired by the accelerometer and the real-time inclination angle acquired by the gyroscope; adjusting an original acceleration curve based on the real-time load rate, to obtain a target acceleration curve corresponding to the original acceleration curve; and controlling the guide-rail robot to move based on the target acceleration curve.

In a fifth aspect, the present disclosure further provides a computer program product. The computer program product includes a computer program. The computer program, when executed by a processor, causes the processor to implement the following steps: determining a real-time load rate corresponding to the guide-rail robot based on the real-time acceleration acquired by the accelerometer and the real-time inclination angle acquired by the gyroscope; adjusting an original acceleration curve based on the real-time load rate, to obtain a target acceleration curve corresponding to the original acceleration curve; and controlling the guide-rail robot to move based on the target acceleration curve.

According to the system and method for guide-rail robot motion control, the computer apparatus, the storage medium, and the computer program product, the real-time load rate corresponding to the guide-rail robot is determined based on the real-time acceleration acquired by the accelerometer and the real-time inclination angle acquired by the gyroscope, the original acceleration curve is adjusted based on the real-time load rate, to obtain the target acceleration curve corresponding to the original acceleration curve, and the guide-rail robot is controlled to move based on the target acceleration curve. The real-time load rate of the guide-rail robot during motion can be determined by using the real-time acceleration acquired by the accelerometer and the real-time inclination angle acquired by the gyroscope. When the load is excessively large, the original acceleration curve can be adjusted in time based on the real-time load rate, and subsequent motion of the guide-rail robot can be controlled based on the obtained target acceleration curve, preventing an excessively large load during the motion of the guide-rail robot.

## BRIEF DESCRIPTION OF THE DRAWINGS

FIG. 1 is a schematic diagram illustrating a system for guide-rail robot motion control according to an embodiment.
FIG. 2 is a schematic diagram illustrating an acceleration and an inclination angle according to an embodiment.
FIG. 3 is a schematic diagram illustrating an acceleration curve and a speed curve according to an embodiment.
FIG. 4 is a flow diagram illustrating a guide-rail robot motion control process according to an embodiment.
FIG. 5 is a flow diagram illustrating a method for guide-rail robot motion control according to an embodiment.
FIG. 6 is a schematic diagram illustrating an internal configuration of a computer apparatus according to an embodiment.

## DETAILED DESCRIPTION

In order to make the objectives, technical solutions, and advantages of the present disclosure clearer, the present disclosure will be further described in detail below with reference to the accompanying drawings and embodiments. It should be understood that specific embodiments described herein are intended only to explain the present disclosure and are not intend to limit the present disclosure.

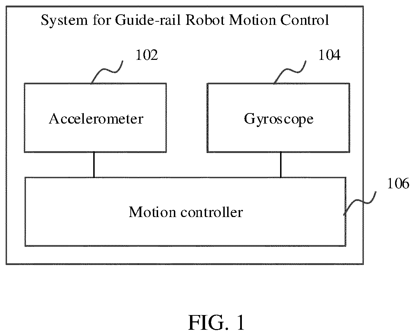

In an embodiment, as shown in FIG. 1, a system for guide-rail robot motion control is provided. The system includes an accelerometer 102, a gyroscope 104, and a motion controller 106. The accelerometer 102 and the gyroscope 104 are both coupled to the motion controller 106.

The accelerometer 102 is configured to acquire a real-time acceleration of a guide-rail robot and send the real-time acceleration to the motion controller 106. The gyroscope 104 is configured to acquire a real-time inclination angle of the guide-rail robot and send the real-time inclination angle to the motion controller 106. The motion controller 106 is configured to receive the real-time acceleration from the accelerometer 102, and receive the real-time inclination angle from the gyroscope 104. The motion controller 106 is configured to determine a real-time load rate corresponding to the guide-rail robot based on the received real-time acceleration and real-time inclination angle, adjust an original acceleration curve based on the real-time load rate, obtain a target acceleration curve corresponding to the original acceleration curve, and control the guide-rail robot to move based on the target acceleration curve.

The guide-rail robot includes, but is not limited to, various rail robots such as vertical rail robots, double circular rail robots, and overhead rail robots.

The accelerometer may be, but is not limited to, various devices that can measure an acceleration of an object. The gyroscope may be, but is not limited to, various device that can measure an inclination angle of the object. The motion controller may be a terminal or a server.

The real-time load rate may be a ratio of a real-time load to a maximum load. The original acceleration curve and the target acceleration curve may be used to represent a mapping relationship between acceleration and time.

In a specific implementation, the motion controller may acquire the original acceleration curve of the guide-rail robot in advance. During the motion of the guide-rail robot, a real-time acceleration of the motion of the guide-rail robot is acquired by using the accelerometer, and a real-time inclination angle of the motion of the guide-rail robot is acquired by using the gyroscope. Both the real-time acceleration and the real-time inclination angle are sent to the motion controller. The motion controller calculates a real-time load rate at a connection between the guide-rail robot and a guide rail based on the received real-time acceleration and real-time inclination angle, adjusts the original acceleration curve based on the calculated real-time load rate, and obtains a target acceleration curve of the guide-rail robot. Subsequently, the motion controller may control the guide-rail robot to move based on the mapping relationship between acceleration and time in the target acceleration curve.

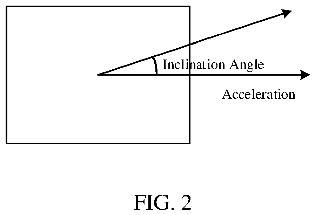

FIG. 2 provides a schematic diagram illustrating an acceleration and an inclination angle. The real-time acceleration of the motion of the guide-rail robot may be acquired in an acceleration direction as shown in FIG. 2 by using the accelerometer, and an angle between an inclination direction and the acceleration direction of the guide-rail robot may be measured by using the gyroscope, to obtain the real-time inclination angle of the motion of the guide-rail robot.

In practical applications, during the motion of the guide-rail robot, the real-time acceleration $a$ of the motion of the guide-rail robot may be measured by using the accelerometer, and the real-time inclination angle $\theta$ of the motion of the guide-rail robot may be measured by using the gyroscope. Given that a mass $m$ and a gravity acceleration $g$ of the guide-rail robot are known, a load of the guide-rail robot at a current time may be calculated as $W = m(g\,sin\theta + a)$. Given that the maximum load force $W$ of the guide-rail robot is known, a load rate at the current time, that is, a real-time load rate, may be calculated as

$$P = \frac{w}{W} \times 100\% = \frac{m(g\,sin\theta+a)}{W} \times 100\% \ .$$

The real-time load rate is compared with a preset load rate threshold. If the real-time load rate exceeds the load rate threshold, indicating that a current load at the connection between the guide-rail robot and the guide rail is excessively large. The acceleration at the subsequent time needs to be reduced, which may specifically be achieved by adjusting the original acceleration curve of the motion of the guide-rail robot. Otherwise, if the real-time load rate does not exceed the load rate threshold, indicating that there is no excessively large load, there is no need to reduce the acceleration at the subsequent time, and there is no need to adjust the original acceleration curve.

According to the system for guide-rail robot motion control, the real-time load rate corresponding to the guide-rail robot is determined based on the real-time acceleration acquired by the accelerometer and the real-time inclination angle acquired by the gyroscope, the original acceleration curve is adjusted based on the real-time load rate, to obtain the target acceleration curve corresponding to the original acceleration curve, and the guide-rail robot is controlled to move based on the target acceleration curve. The real-time load rate of the guide-rail robot during motion can be determined by using the real-time acceleration acquired by the accelerometer and the real-time inclination angle acquired by the gyroscope. When the load is excessively large, the original acceleration curve can be adjusted in time based on the real-time load rate, and subsequent motion of the guide-rail robot can be controlled based on the obtained target acceleration curve, preventing an excessively large load during the motion of the guide-rail robot.

In an embodiment, an original speed curve corresponding to the original acceleration curve and a target speed curve corresponding to the target acceleration curve are both S-shaped curves, and time intervals corresponding to each of the S-shaped curves include a positive-jerk acceleration interval, a constant acceleration interval, a negative-jerk acceleration interval, a constant speed interval, a positive-jerk deceleration interval, a constant deceleration interval, and a negative-jerk deceleration interval.

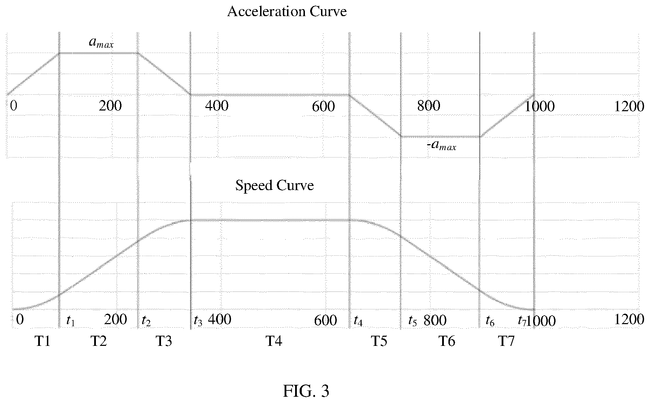

In a specific implementation, the original acceleration curve and the target acceleration curve are collectively called an acceleration curve, and the original speed curve and the target speed curve are collectively called a speed curve. As shown in FIG. 3, the acceleration curve represents a mapping relationship between acceleration and time, and the speed curve represents a mapping relationship between speed and time. The speed curve may be an S-shaped curve. Both the acceleration curve and the speed curve may be divided into seven segments, with corresponding time intervals including a positive-jerk acceleration interval (T1), a constant acceleration interval (T2), a negative-jerk acceleration interval (T3), a constant speed interval (T4), a positive-jerk deceleration interval (T5), a constant deceleration interval (T6), and a negative-jerk deceleration interval (T7). The jerk during the acceleration or the deceleration is denoted by a variable $U$, that is,

$$U = \frac{d_a}{d_t} \, ,$$

where $d_a$ denotes an acceleration differential, and $d_t$ denotes a time differential.

If the maximum acceleration is set to $a_{max}$, the acceleration in the seven time intervals may be calculated respectively as below:

the positive-jerk acceleration interval (T1): $a$ gradually increases, $a = Ut$, $0 < t < t_1$;
the constant acceleration interval (T2): $a$ reaches its maximum, $a = a_{max}$, $t_1 < t < t_2$;
the negative-jerk acceleration interval (T3): $a$ gradually decreases, $a = a_{max} - Ut$, $t_2 < t < t_3$;
the constant speed interval (T4): $a$ remains constant, $a = 0$, $t_3 < t < t_4$;
the positive-jerk deceleration interval (T5): $|a|$ gradually increases, $a = -Ut$, $t_4 < t < t_5$;
the constant deceleration interval (T6): $|a|$ reaches its maximum, $a = -a_{max}$, $t_5 < t < t_6$; and
the negative-jerk deceleration interval (T7), $|a|$ gradually decreases, $a = a_{max} - Ut$, $t_6 < t < t_7$.

In this embodiment, the original speed curve corresponding to the original acceleration curve and the target speed curve corresponding to the target acceleration curve are both S-shaped curves, and time intervals corresponding to each of the S-shaped curves include the positive-jerk acceleration interval, the constant acceleration interval, the negative-jerk acceleration interval, the constant speed interval, the positive-jerk deceleration interval, the constant deceleration interval, and the negative-jerk deceleration interval, which can gradually change the acceleration in the S-shaped curve acceleration control mode, reduce robot jitter, alleviate swing that occurs at the moment of acceleration or speed stabilization under constant acceleration control, reduce structural deformation caused by the swing, prolong the service life of structural devices, and also increase stability of the robot during the speed change.

In an embodiment, the motion controller is further configured to obtain a maximum acceleration in the target acceleration curve based on a ratio of the real-time acceleration to the real-time load rate, adjust the original acceleration curve based on the maximum acceleration, and obtain the target acceleration curve.

In a specific implementation, when the real-time load rate exceeds the load rate threshold, the motion controller may take the ratio of the real-time acceleration to the real-time load rate as the maximum acceleration in the target acceleration curve, adjust the original acceleration curve based on the maximum acceleration, and obtain the target acceleration curve.

For example, assuming that the maximum acceleration in the original acceleration curve is $a_{max0}$, the guide-rail robot moves based on the original acceleration curve at the current time, and the motion controller acquires the real-time acceleration $a$ and the real-time inclination angle $\theta$ of the guide-rail robot, and calculates the real-time load rate $P$ accordingly. If $P$ exceeds a load rate threshold $P_T$, it indicates that the current load is excessively large. In order to reduce the subsequent load, the subsequent acceleration may be reduced by using $P$. A calculation formula for a new maximum acceleration is $a_{max1} = a/P$. According to the calculation formula for the acceleration in the above embodiments, the original acceleration curve is adjusted based on $a_{max1}$, and the target acceleration curve is obtained. Subsequently, the guide-rail robot moves based on the target acceleration curve.

It is to be noted that the calculation formula for the maximum acceleration may alternatively be $a_{max1} = \lambda a/P$, where $\lambda$ denotes a coefficient of the calculation formula for the maximum acceleration. By setting the coefficient, accuracy of the target acceleration curve can be further improved, and the load can be reasonably reduced.

In this embodiment, the motion controller obtains the maximum acceleration in the target acceleration curve based on the ratio of the real-time acceleration to the real-time load rate, adjusts the original acceleration curve based on the maximum acceleration, and obtains the target acceleration curve, which can make the real-time load rate inversely proportional to the maximum acceleration, and reduce the acceleration of the guide-rail robot during the subsequent motion by using an excessive real-time load rate, thereby preventing an excessively large load during the subsequent motion.

In an embodiment, the motion controller is further configured to acquire a time difference between a current time and a first target time, and an acceleration difference between the real-time acceleration and the maximum acceleration, determine a target slope in the target acceleration curve based on a ratio of the acceleration difference to the time difference, and adjust the original acceleration curve based on the target slope, to obtain the target acceleration curve.

The first target time may be a time corresponding to a turning point associated with the maximum acceleration in the acceleration curve, for example, $t_1$, $t_2$, $t_5$, or $t_6$ in FIG. 3.

In a specific implementation, the motion controller may determine the first target time according to the current time, calculate the time difference between the current time and the first target time and the acceleration difference between the real-time acceleration and the maximum acceleration, take the ratio of the acceleration difference to the time difference as the target slope, and adjust the original acceleration curve based on the target slope, to obtain the target acceleration curve.

For example, assuming that the current time $t$ is within the positive-jerk acceleration interval, it is determined that the first target time is the turning point $t_1$ adjacent to the current time, the time difference is $\Delta t = t_1 - t$, the acceleration difference is $\Delta a = a_{max1} - a$, and the target slope is $k = \Delta a / \Delta t$. The target acceleration curve obtained after adjustment takes an origin as a starting point in the T1 segment, and the acceleration gradually increases to $a_{max1}$ with the slope $k$. The subsequent segments are adjusted accordingly. If the current time $t$ is within the positive-jerk deceleration interval, it is determined that the first target time is $t_5$, the time difference is $\Delta t = t_5 - t$, the acceleration difference is $\Delta a = -a - (-a_{max1})$, and the target slope is $k = \Delta a / \Delta t$. The target acceleration curve obtained after adjustment takes $t_4$ as a starting point in the T5 segment, and the acceleration gradually decreases to $-a_{max1}$ with the slope $k$. The subsequent segments are adjusted accordingly.

In this embodiment, the motion controller acquires the time difference between the current time and the first target time, and the acceleration difference between the real-time acceleration and the maximum acceleration, determines the target slope in the target acceleration curve based on the ratio of the acceleration difference to the time difference, and adjusts the original acceleration curve based on the target slope, to obtain the target acceleration curve, which can reduce the acceleration of the motion of the guide-rail robot when the load is excessively load, thereby reducing the load caused by the subsequent motion of the guide-rail robot.

In an embodiment, the motion controller is further configured to adjust the original acceleration curve to obtain the target acceleration curve when the real-time load rate exceeds a preset load rate threshold.

In a specific implementation, the motion controller may compare the real-time load rate with the preset load rate threshold. If the real-time load rate exceeds the load rate threshold, indicating that a current load is excessively large, the original acceleration curve is reduced to obtain the target acceleration curve, and the motion is performed subsequently based on the acceleration in the target acceleration curve. Otherwise, if the real-time load rate does not exceed the load rate threshold, indicating that there is no excessively large load, there is no need to reduce the acceleration at the subsequent time, and there is no need to adjust the original acceleration curve.

In this embodiment, the motion controller adjusts the original acceleration curve to obtain the target acceleration curve when the real-time load rate exceeds a preset load rate threshold, which can detect an excessively large load in time during the motion of the guide-rail robot, reduce the acceleration of the guide-rail robot in time, and reduce the load in time.

In an embodiment, the motion controller is further configured to take the target acceleration curve as a new original acceleration curve, and control the guide-rail robot to move based on the new original acceleration curve. The motion controller is further configured to adjust the new original acceleration curve based on a new real-time acceleration acquired by the accelerometer and a new real-time inclination angle acquired by the gyroscope, to obtain a new target acceleration curve.

In a specific implementation, after adjusting the original acceleration curve to obtain the target acceleration curve and controlling the guide-rail robot to move based on the target acceleration curve, the motion controller may alternatively take the target acceleration curve as a new original acceleration curve, and during the motion of the guide-rail robot, acquire a new real-time acceleration of the guide-rail robot through the accelerometer, and acquire a new real-time inclination angle of the guide-rail robot through the gyroscope. The motion controller determines a new real-time load rate based on the new real-time acceleration and the new real-time inclination angle, adjusts the new original acceleration curve when the new real-time load rate exceeds the load rate threshold, to obtain a new target acceleration curve, and then control the guide-rail robot to move based on the new target acceleration curve.

It is to be noted that the above update process of the target acceleration curve may be repeated according to an actual requirement, to prevent an excessively large load at any subsequent time.

In this embodiment, the motion controller takes the target acceleration curve as a new original acceleration curve, and controls the guide-rail robot to move based on the new original acceleration curve. The motion controller is further configured to adjust the new original acceleration curve based on a new real-time acceleration acquired by the accelerometer and a new real-time inclination angle acquired by the gyroscope, to obtain a new target acceleration curve. As a result, an excessively large load throughout the motion of the guide-rail robot can be detected and this situation can be corrected in time.

In an embodiment, the motion controller is further configured to determine a target speed of the guide-rail robot at a second target time based on a target speed curve corresponding to the target acceleration curve, and control the guide-rail robot to move based on the target speed at the second target time.

The second target time may be any time after the current time.

In a specific implementation, when the motion controller is required to control the motion of the guide-rail robot at any time after the current time, the any time may be determined as the second target time, a target speed at the second target time may be determined in the target speed curve corresponding to the target acceleration curve, and the guide-rail robot is controlled to move based on the target speed at the second target time.

For example, the target speed curve may be determined first based on the target acceleration curve.

Assuming that the current time is $t$ and a time step is set to $\tau$, the second target time is $t + \tau, t + 2\tau, t + 3\tau, ....$. The target speed corresponding to each second target time is determined based on the target speed curve, so that the guide-rail robot moves based on the target speed at each second target time.

In this embodiment, the motion controller determines the target speed of the guide-rail robot at the second target time based on the target speed curve corresponding to the target acceleration curve, and controls the guide-rail robot to move based on the target speed at the second target time. As a result, the motion speed of the guide-rail robot can be accurately controlled and reliability of the control over the guide-rail robot can be improved.

In order to facilitate those of ordinary skill in the art to have a thorough understanding of the embodiments of the present disclosure, description will be provided below with reference to a specific example.

A conventional control mode in the system for guide-rail robot control includes trapezoidal rate control. When accelerating, the robot will accelerate at a constant rate until the robot reaches the target speed. Similarly, when decelerating, the robot will decelerate at a constant rate until the robot stops. In this process, due to inertia of a body of the robot, at the moment of acceleration or speed stabilization, the robot may tilt forwards and backwards and swing several times. During the swing of the robot, large load deformation may be generated at a connection position of the robot, thereby reducing the service life and operational stability of the robot. At the same time, due to a large load of the system on the unloading structure in the trapezoidal rate control, during deceleration, acceleration is generally required to decrease for alleviation the load, which requires a larger braking distance to be reserved for deceleration during high-speed motion.

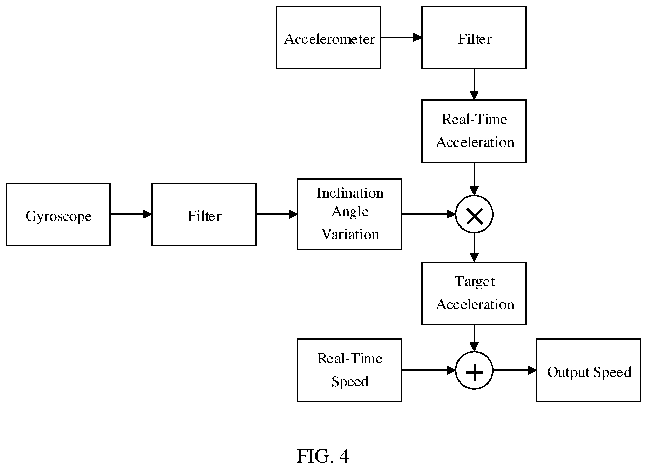

In the present disclosure, sudden acceleration changes are eliminated by controlling gradual changes in the acceleration of the robot, thereby making the motion of the robot smoother, and a braking distance of the robot may be reduced by adjusting parameters of the S-shaped curve through data from the gyroscope. FIG. 4 provides a flow diagram illustrating a guide-rail robot motion control process. According to FIG. 4, the guide-rail robot motion control process is specifically as follows.

The accelerometer acquires an actual acceleration of the body of the robot, the gyroscope feeds back an inclination angle variation of the robot, a structural load rate of the robot is calculated based on the actual acceleration and the inclination angle variation and is fed back to an acceleration controller, an output acceleration value is adjusted through closed-loop control, and a real-time speed fed back by a motor forms a closed loop with the output acceleration value to control the speed output of the robot.

An actual control process of the S-shaped curve may be divided into seven segments: positive-jerk acceleration (T1), constant acceleration (T2), negative-jerk acceleration (T3), constant speed (T4), positive-jerk deceleration (T5), constant deceleration (T6), and negative-jerk deceleration (T7). For convenience of expression, the jerk during the acceleration or the deceleration of the S-shaped curve is denoted by a variable U, that is,

$$U = \frac{d_a}{d_t} \ .$$

When the maximum acceleration is $a_{max}$, the acceleration in the seven segments of the S-shaped curve may be calculated respectively as below:

the positive-jerk acceleration interval (T1): $a$ gradually increases, $a = Ut$, $0 < t < t_1$;
the constant acceleration interval (T2): $a$ reaches its maximum, $a = a_{max}$, $t_1 < t < t_2$;
the negative-jerk acceleration interval (T3): $a$ gradually decreases, $a = a_{max} - Ut$, $t_2 < t < t_3$;
the constant speed interval (T4): $a$ remains constant, $a = 0$, $t_3 < t < t_4$;
the positive-jerk deceleration interval (T5): $|a|$ gradually increases, $a = -Ut$, $t_4 < t < t_5$;
the constant deceleration interval (T6): $|a|$ reaches its maximum, $a = -a_{max}$, $t_5 < t < t_6$; and
the negative-jerk deceleration interval (T7), $|a|$ gradually decreases, $a = a_{max} - Ut$, $t_6 < t < t_7$.

In the above method, an acceleration gradual change control method is used, so that robot jitter is reduced, swing generated at the moment of acceleration or speed stabilization under constant acceleration control is alleviated, structural deformation caused by the swing is reduced, and the service life of structural devices is prolonged. At the same time, stability of the robot during the speed change is improved.

Moreover, the conventional method includes load torque adjustment, which has hysteresis, with a real-time effect often failing to meet expectations. The load change is nonlinear, and a steady state adjustment effect thereof is not ideal. With the above method according to the present disclosure, an acceleration of the robot is acquired through the accelerometer, and an inertial motion state of the robot body is acquired through the gyroscope, so the method has the characteristics of fast real-time response and stable control.

Based on a same inventive concept, embodiments of the present disclosure further provide a method for guide-rail robot motion control for implementing the system for guide-rail robot motion control as referred to above. The implementation solution provided by the method to solve the problem is similar to the implementation solution described in the above system. Therefore, specific limitations in one or more embodiments of the method for guide-rail robot motion control provided below may be obtained with reference to the limitations on the system for guide-rail robot motion control described above. Details are not described herein.

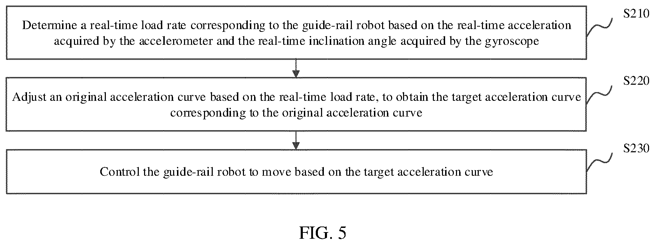

In an embodiment, as shown in FIG. 5, a method for guide-rail robot motion control is provided. The method may be, for example, applied to the motion controller 106 in FIG. 1, and includes the following steps.

In step S210, a real-time load rate corresponding to the guide-rail robot is determined based on the real-time acceleration acquired by the accelerometer and the real-time inclination angle acquired by the gyroscope.

In step S220, an original acceleration curve is adjusted based on the real-time load rate, to obtain a target acceleration curve corresponding to the original acceleration curve.

In step S230, the guide-rail robot is controlled to move based on the target acceleration curve.

In a specific implementation, the motion controller may acquire the original acceleration curve of the guide-rail robot in advance. During the motion of the guide-rail robot, real-time acceleration of the motion of the guide-rail robot is acquired by using the accelerometer, and a real-time inclination angle of the motion of the guide-rail robot is acquired by using the gyroscope. Both the real-time acceleration and the real-time inclination angle are sent to the motion controller. The motion controller calculates a real-time load rate at a connection between the guide-rail robot and a guide rail based on the received real-time acceleration and real-time inclination angle, adjusts the original acceleration curve according to the calculated real-time load rate, and obtains a target acceleration curve of the guide-rail robot. Subsequently, the motion controller may control the guide-rail robot to move according to the mapping relationship between acceleration and time in the target acceleration curve.

Since the detailed processing of the guide-rail robot has been described in detail in the foregoing embodiments, details are not described herein again.

According to the method for guide-rail robot motion control, the real-time load rate corresponding to the guide-rail robot is determined based on the real-time acceleration acquired by the accelerometer and the real-time inclination angle acquired by the gyroscope, the original acceleration curve is adjusted based on the real-time load rate, to obtain the target acceleration curve corresponding to the original acceleration curve, and the guide-rail robot is controlled to move based on the target acceleration curve. The real-time load rate of the guide-rail robot during motion can be determined by using the real-time acceleration acquired by the accelerometer and the real-time inclination angle acquired by the gyroscope. When the load is excessively large, the original acceleration curve can be adjusted in time based on the real-time load rate, and subsequent motion of the guide-rail robot can be controlled based on the obtained target acceleration curve, preventing an excessively large load during the motion of the guide-rail robot.

In an embodiment, step S220 may specifically include: obtaining maximum acceleration in the target acceleration curve based on a ratio of the real-time acceleration to the real-time load rate, adjusting the original acceleration curve based on the maximum acceleration, and obtaining the target acceleration curve.

In an embodiment, an original speed curve corresponding to the original acceleration curve and a target speed curve corresponding to the target acceleration curve are both S-shaped curves, and time intervals corresponding to each of the S-shaped curves include a positive-jerk acceleration interval, a constant acceleration interval, a negative-jerk acceleration interval, a constant speed interval, a positive-jerk deceleration interval, a constant deceleration interval, and a negative-jerk deceleration interval.

In an embodiment, step S220 may specifically further include: acquiring a time difference between a current time and a first target time, and an acceleration difference between the real-time acceleration and the maximum acceleration, determining a target slope in the target acceleration curve based on a ratio of the acceleration difference to the time difference, and adjusting the original acceleration curve based on the target slope, to obtain the target acceleration curve.

In an embodiment, step S220 may specifically further include: adjusting the original acceleration curve to obtain the target acceleration curve when the real-time load rate exceeds a preset load rate threshold.

In an embodiment, after the controlling the guide-rail robot to move based on the target acceleration curve, the method may further include: taking the target acceleration curve as a new original acceleration curve, and controlling the guide-rail robot to move based on the new original acceleration curve; and adjusting the new original acceleration curve based on a new real-time acceleration acquired by the accelerometer and a new real-time inclination angle acquired by the gyroscope, to obtain a new target acceleration curve.

In an embodiment, step S230 may specifically include: determining a target speed of the guide-rail robot at a second target time based on a target speed curve corresponding to the target acceleration curve, and controlling the guide-rail robot to move based on the target speed at the second target time.

It should be understood that, although the steps in the flow diagrams as referred to in the above embodiments are shown in sequence as indicated by the arrows, the steps are not necessarily performed in the order indicated by the arrows. Unless otherwise clearly specified herein, the steps are performed without any strict sequence limitation, and the steps may be performed in other orders. In addition, at least some steps in the flow diagrams as referred to in the above embodiments may include a plurality of steps or a plurality of stages, and such steps or stages are not necessarily performed at a same moment, and may be performed at different moments. The steps or stages are not necessarily performed in sequence, and the steps or stages and at least some of other steps or steps or stages of other steps may be performed in turn or alternately.

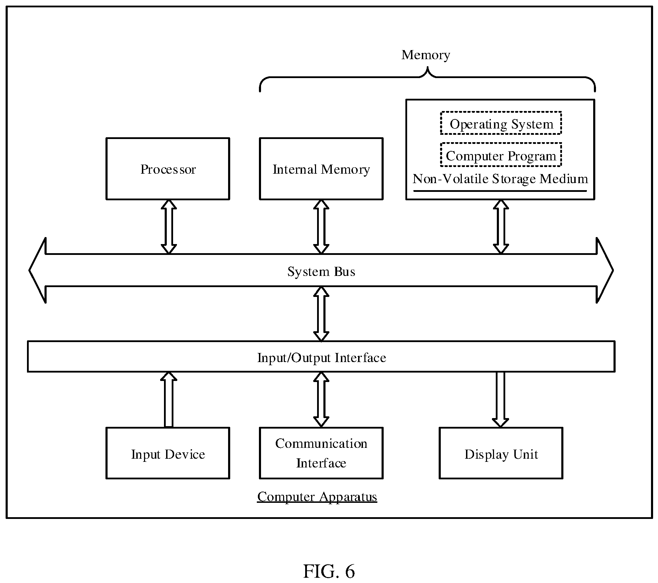

In an embodiment, a computer apparatus is provided. The computer apparatus may be a terminal. An exemplary internal configuration of the computer apparatus is shown in FIG. 6. The computer apparatus includes a processor, a memory, an input/output interface, a communication interface, a display unit, and an input device. The processor, the memory, and the input/output interface are coupled through a system bus. The communication interface, the display unit, and the input device are coupled to the system bus through the input/output interface. The processor of the computer apparatus is configured to provide computing and control capabilities. The memory of the computer apparatus includes a non-volatile storage medium and an internal memory. The non-volatile storage medium stores an operating system and a computer program. The internal memory provides an environment for running of the operating system and the computer program in the non-volatile storage medium. The input/output interface of the computer apparatus is used to exchange information between the processor and an external device. The communication interface of the computer apparatus is used to conduct communication with an external terminal in a wired or wireless manner. The wireless manner may be implemented by WIFI, a mobile cellular network, near field communication (NFC), or other technologies. The computer program is executed by a processor to implement a method for guide-rail robot motion control. The display unit of the computer apparatus is configured to form a visually visible picture, which may be a display screen, a projection apparatus, or a virtual reality imaging apparatus. The display screen may be a liquid crystal display screen or an e-ink display screen. The input device of the computer apparatus may be a touch layer covering the display screen, or may be a button, a trackball, or a touchpad disposed on a housing of the computer apparatus, or may be an external keyboard, touchpad, a mouse, or the like.

Those of ordinary skill in the art may understand that the configuration shown in FIG. 6 is merely a block diagram illustrating a partial structure related to a solution in the present disclosure, and does not constitute a limitation to the computer apparatus to which the solution in the present disclosure is applied. Specifically, the computer apparatus may include more or fewer components than those shown in the figure, or have some components combined, or have a different component deployment.

In an embodiment, a computer apparatus is further provided, including a memory and a processor. The memory stores a computer program. The processor, when executing the computer program, implements steps in the above method embodiments.

In an embodiment, a computer-readable storage medium is provided, having a computer program stored thereon. The computer program, when executed by a processor, causes the processor to implement steps in the above method embodiments.

In an embodiment, a computer program product is provided, including a computer program. The computer program, when executed by a processor, causes the processor to implement steps in the above method embodiments.

It is to be noted that user information (including, but not limited, to user equipment information, user personal information, and the like) and data (including, but not limited to, data for analysis, stored data, displayed data, and the like) involved in the present disclosure are all authorized by the user or information and data fully authorized by all parties, and collection, use and processing of relevant data are required to comply with relevant laws, regulations, and standards of relevant countries and regions.

Those of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. Any reference to a memory, storage, a database, or another medium used in the embodiments provided the present disclosure may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache. By way of description and not limitation, the RAM may be in various forms, such as a static random access memory (SRAM), a dynamic random access memory (DRAM), or the like. The database as referred to in the embodiments provided in the present disclosure may include at least one of a relational database and a non-relational database. The non-relational database may include a blockchain-based distributed database, but is not limited thereto. The processor as referred to in the embodiments provided in the present disclosure may be a general-purpose processor, a central processing unit, a graphics processor, a digital signal processor, a programmable logic device, a data processing logic device based on quantum computing, or the like, but is not limited thereto.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present disclosure, and the descriptions are relatively specific and detailed, but they should not be construed as limiting the scope of the present disclosure.

## Claims

1. A system for guide-rail robot motion control, the system comprising:

   a motion controller (106);
   an accelerometer (102) coupled to the motion controller (106), and configured to acquire a real-time acceleration of a guide-rail robot and send the real-time acceleration to the motion controller (106); and
   a gyroscope (104) coupled to the motion controller (106), and configured to acquire a real-time inclination angle of the guide-rail robot and send the real-time inclination angle to the motion controller (106),
   wherein the motion controller (106) is configured to:

   receive the real-time acceleration from the accelerometer (102) and receive the real-time inclination angle from the gyroscope (104);
   determine a real-time load rate corresponding to the guide-rail robot based on the received real-time acceleration and real-time inclination angle;
   obtain a maximum acceleration in a target acceleration curve based on a ratio of the real-time acceleration to the real-time load rate;
   adjust an original acceleration curve based on the maximum acceleration, to obtain the target acceleration curve corresponding to the original acceleration curve; and
   control the guide-rail robot to move based on the target acceleration curve.

2. The system of claim 1, wherein an original speed curve corresponding to the original acceleration curve and a target speed curve corresponding to the target acceleration curve are both S-shaped curves, and time intervals corresponding to each of the S-shaped curves comprise a positive-jerk acceleration interval, a constant acceleration interval, a negative-jerk acceleration interval, a constant speed interval, a positive-jerk deceleration interval, a constant deceleration interval, and a negative-jerk deceleration interval.

3. The system of claim 1 or 2, wherein the motion controller (106) is further configured to acquire a time difference between a current time and a first target time, and an acceleration difference between the real-time acceleration and the maximum acceleration, determine a target slope in the target acceleration curve based on a ratio of the acceleration difference to the time difference, and adjust the original acceleration curve based on the target slope, to obtain the target acceleration curve.

4. The system of any one of claims 1 to 3, wherein the motion controller (106) is further configured to adjust the original acceleration curve to obtain the target acceleration curve when the real-time load rate exceeds a preset load rate threshold.

5. The system of any one of claims 1 to 4, wherein the motion controller (106) is further configured to take the target acceleration curve as a new original acceleration curve, and control the guide-rail robot to move based on the new original acceleration curve; and
   wherein the motion controller (106) is further configured to adjust the new original acceleration curve based on a new real-time acceleration acquired by the accelerometer (102) and a new real-time inclination angle acquired by the gyroscope (104), to obtain a new target acceleration curve.

6. The system of any one of claims 1 to 5, wherein the motion controller (106) is further configured to determine a target speed of the guide-rail robot at a second target time based on a target speed curve corresponding to the target acceleration curve, and control the guide-rail robot to move based on the target speed at the second target time.

7. A method for guide-rail robot motion control, applied to a motion controller in a system for guide-rail robot motion control, the system comprising an accelerometer (102), a gyroscope (104) and a motion controller (106) coupled to both the accelerometer (102) and the gyroscope (104), the accelerometer (102) being configured to acquire a real-time acceleration of a guide-rail robot and send the real-time acceleration to the motion controller (106), the gyroscope (104) being configured to acquire a real-time inclination angle of the guide-rail robot and send the real-time inclination angle to the motion controller (106), wherein the method comprises:

   determining (S210) a real-time load rate corresponding to the guide-rail robot based on the real-time acceleration acquired by the accelerometer and the real-time inclination angle acquired by the gyroscope;
   obtaining a maximum acceleration in a target acceleration curve based on a ratio of the real-time acceleration to the real-time load rate; adjusting (S220) an original acceleration curve based on the maximum acceleration, to obtain the target acceleration curve corresponding to the original acceleration curve; and controlling (S230) the guide-rail robot to move based on the target acceleration curve.

8. The method of claim 7, wherein an original speed curve corresponding to the original acceleration curve and a target speed curve corresponding to the target acceleration curve are both S-shaped curves, and time intervals corresponding to each of the S-shaped curves comprise a positive-jerk acceleration interval, a constant acceleration interval, a negative-jerk acceleration interval, a constant speed interval, a positive-jerk deceleration interval, a constant deceleration interval, and a negative-jerk deceleration interval.

9. The method of claim 7 or 8, wherein the adjusting the original acceleration curve based on the maximum acceleration, to obtain the target acceleration curve corresponding to the original acceleration curve comprises:

   acquiring a time difference between a current time and a first target time, and an acceleration difference between the real-time acceleration and the maximum acceleration; determining a target slope in the target acceleration curve based on a ratio of the acceleration difference to the time difference; and adjusting the original acceleration curve based on the target slope, to obtain the target acceleration curve.

10. The method of any one of claims 7 to 9, wherein the adjusting the original acceleration curve based on the maximum acceleration, to obtain the target acceleration curve corresponding to the original acceleration curve comprises: adjusting the original acceleration curve to obtain the target acceleration curve when the real-time load rate exceeds a preset load rate threshold.

11. The method of any one of claims 7 to 10, further comprising:

    taking the target acceleration curve as a new original acceleration curve, and controlling the guide-rail robot to move based on the new original acceleration curve; and adjusting the new original acceleration curve based on a new real-time acceleration acquired by the accelerometer and a new real-time inclination angle acquired by the gyroscope, to obtain a new target acceleration curve.

12. The method of any one of claims 7 to 11, wherein the controlling the guide-rail robot to move based on the target acceleration curve comprises: determining a target speed of the guide-rail robot at a second target time based on a target speed curve corresponding to the target acceleration curve, and controlling the guide-rail robot to move based on the target speed at the second target time.

13. A computer apparatus comprising a memory and a processor, the memory storing a computer program, wherein the processor, when executing the computer program, implements the method of any one of claims 7 to 12.

14. A computer-readable storage medium having a computer program stored thereon, wherein the computer program, when executed by a processor, causes the processor to implement the method of any one of claims 7 to 12.

15. A computer program product comprising a computer program, wherein the computer program, when executed by a processor, causes the processor to implement the method of any one of claims 7 to 12.

System for Guide-rail Robot Motion Control

102

104

Accelerometer

Gyroscope

106

Motion controller

FIG. 1

FIG. 2

Acceleration Curve

FIG. 3

FIG. 4

| Determine a real-time load rate corresponding to the guide-rail robot based on the real-time acceleration acquired by the accelerometer and the real-time inclination angle acquired by the gyroscope | S210 |

| Adjust an original acceleration curve based on the real-time load rate, to obtain the target acceleration curve corresponding to the original acceleration curve | S220 |

| Control the guide-rail robot to move based on the target acceleration curve | S230 |

FIG. 5

Memory

Processor

Internal Memory

Operating System

Computer Program

Non-Volatile Storage Medium

System Bus

Input/Output Interface

Input Device

Communication Interface

Display Unit

Computer Apparatus

FIG. 6

Europäisches
Patentamt

European
Patent Office

Office européen
des brevets

# EUROPEAN SEARCH REPORT

Application Number

EP 24 17 6593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 101 687 528 A (EQUOS RES CO LTD) 31 March 2010 (2010-03-31) * the whole document * | 1-15 | INV. B25J9/16 B60L13/00 |
| A | Anonymous: "homework and exercises - Max Acceleration on an incline? (2010 F=ma #8) - Physics Stack Exchange", , 28 February 2016 (2016-02-28), XP093216850, Retrieved from the Internet: URL:https://physics.stackexchange.com/questions/226580/max-acceleration-on-an-incline-2010-f-ma-8 * the whole document * | 1-15 | ADD. G05B19/416 |
| A | SPIROIU MARIUS-ADRIAN: "About the influence of wheel-rail adhesion on the maximum speed of trains", MATEC WEB OF CONFERENCES, vol. 178, 1 January 2018 (2018-01-01), page 06004, XP093216853, ISSN: 2261-236X, DOI: 10.1051/matecconf/201817806004 * the whole document * | 1-15 | |
| A | US 11 130 493 B2 (AUTOMOTIVE RES & TESTING CT [TW]) 28 September 2021 (2021-09-28) * the whole document * | 1-15 | |

TECHNICAL FIELDS
SEARCHED (IPC)

B25J
B60L
G05B

The present search report has been drawn up for all claims

| Place of search | Date of completion of the search | Examiner |
|---|---|---|
| The Hague | 22 October 2024 | Schmitt, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 24 17 6593

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | | Publication date | Patent family member(s) | | Publication date |
|---|---|---|---|---|---|
| CN 101687528 | A | 31-03-2010 | CN | 101687528 A | 31-03-2010 |
| | | | EP | 2163467 A1 | 17-03-2010 |
| | | | US | 2010168993 A1 | 01-07-2010 |
| | | | WO | 2009004844 A1 | 08-01-2009 |
| US 11130493 | B2 | 28-09-2021 | NONE | | |

EPO FORM P0459

For more details about this annex : see Official Journal of the European Patent Office, No. 12/82